# DEMANDE DE BREVET EUROPEEN

(11) **EP 2 801 903 A1**
(43) Date de publication de la demande: **12.11.2014**
(21) Numéro de dépôt: 14166921.8
(22) Date de dépôt: 02.05.2014
(51) Int. Cl.: G06F 3/147, G01C 23/00, G06F 3/00, G09G 5/14, H04N 1/00

(54) **Dispositif d'aide au pilotage propre à afficher une animation, et procédé associé**

(30) Priorité: 06.05.2013 FR 1301047
(71) Demandeur: Dassault Aviation, 75008 Paris (FR)
(72) Inventeur: Dupont de Dinechin, Sébastien, 13090 Aix en Provence (FR); Valette, Fabrice, 13008 MARSEILLE (FR)
(74) Mandataire: Blot, Philippe Robert Emile

(57) **Abrégé**

Ce dispositif (10) d'aide au pilotage d'un véhicule, notamment d'un aéronef, comprend une surface (16) d'affichage d'images et un ensemble de gestion d'affichage d'images destinées à être affichées sur la surface d'affichage (16) en superposition avec une vision d'un paysage extérieur. L'ensemble de gestion est propre à commander l'affichage d'images d'information de pilotage (40, 42, 44, 48, 50) sur la surface d'affichage (16).

L'ensemble de gestion (20) est également propre à commander l'affichage, pour au moins une desdites images d'information de pilotage (40, 42, 44, 48, 50), d'une animation destinée à attirer l'attention d'un utilisateur sur ladite image d'information de pilotage (40, 42, 44, 48, 50), l'animation comprenant l'affichage d'une image d'alerte et le rétrécissement de l'image d'alerte.

## Description

La présente invention concerne un dispositif d'aide au pilotage d'un véhicule, notamment d'un aéronef, du type comprenant une surface d'affichage d'images et un ensemble de gestion d'affichage d'images destinées à être affichées sur la surface d'affichage en superposition avec une vision d'un paysage extérieur, l'ensemble de gestion étant propre à commander l'affichage d'images d'information de pilotage sur la surface d'affichage.

Les postes de pilotage des véhicules, notamment des aéronefs, sont de nos jours équipés de multiples dispositifs d'aide au pilotage, destinés à assister le pilote dans la conduite du véhicule en affichant des informations relatives à la vitesse et à l'altitude du véhicule, des informations relatives au fonctionnement des appareils embarqués à bord du véhicule, ou des informations sur l'environnement du véhicule.

Ces dispositifs d'aide au pilotage comprennent communément des « dispositifs à affichage tête haute » (en anglais « head up display », ou HUD), situés à hauteur de regard pour le pilote, et affichant les informations en surimpression sur une vision de l'environnement extérieur à travers le dispositif d'aide au pilotage, et des « dispositifs à affichage tête basse » (en anglais « head down display », ou HDD), situés sur la planche de bord, et pour lesquels le pilote doit quitter l'environnement extérieur des yeux pour lire les informations affichées.

Pour afficher les images en surimpression sur la vision de l'environnement extérieur, les dispositifs à affichage tête haute emploient le plus souvent des collimateurs tête haute. Ces collimateurs comprennent généralement une source d'images, une optique collimatrice qui renvoie à l'infini les images générées par ladite source, et un combineur traversé par le rayonnement provenant de l'environnement extérieur et par le rayonnement transmis par l'optique collimatrice. Dans les collimateurs, la source d'images est par exemple un afficheur monochrome à tube cathodique.

Les dispositifs à affichage tête haute permettent ainsi au pilote de prendre connaissance des informations affichées en continuant d'observer l'environnement extérieur. En outre, les dispositifs à affichage tête haute permettent d'afficher des informations qui enrichissent la vision de l'environnement extérieur par le pilote, comme des marqueurs faisant ressortir certains éléments de l'environnement extérieur.

Cependant, les dispositifs à affichage tête haute embarqués dans les aéronefs récents présentent l'inconvénient d'une multiplication des informations affichées, distrayant le pilote et l'empêchant de porter rapidement son attention sur les informations critiques affichées, voire l'empêchant de remarquer une information critique qui est affichée.

Un objectif de l'invention est de mieux attirer l'attention du pilote sur les informations critiques qui lui sont présentées.

A cet effet, l'invention a pour objet un dispositif d'aide au pilotage du type précité, dans lequel l'ensemble de gestion est propre à commander l'affichage, pour au moins une desdites images d'information de pilotage, d'une animation destinée à attirer l'attention d'un utilisateur sur ladite image d'information de pilotage, l'animation comprenant l'affichage d'une image d'alerte et le rétrécissement de l'image d'alerte.

Selon des modes de réalisation particuliers de l'invention, le dispositif d'aide au pilotage comprend également l'une ou plusieurs des caractéristiques suivantes, prise(s) isolément ou suivant toute(s) combinaison(s) techniquement possible(s) :
- l'image d'alerte couvre, à au moins un instant de l'animation, plus de 50%, de préférence plus de 75% de la surface d'affichage ;
- l'image d'alerte a une forme de cadre ;
- l'image d'alerte est, au début de l'animation, centrée sur un centre de la surface d'affichage ;
- l'animation propre à être affichée comprend un centrage de l'image d'alerte sur l'image d'information de pilotage ;
- l'animation propre à être affichée comprend, après le rétrécissement et le centrage de l'image d'alerte, un sursaut de l'image d'alerte, comportant :
   - un grossissement de l'image d'alerte, ledit grossissement n'excédant avantageusement pas 20%, de préférence 10%, de la taille de l'image d'alerte avant le grossissement, puis
   - un nouveau rétrécissement de l'image d'alerte, jusqu'à sensiblement la même taille qu'avant le grossissement ;
- l'animation propre à être affichée comprend l'apparition de l'image d'information de pilotage ;
- l'animation propre à être affichée comprend un grossissement de l'image d'information de pilotage ;
- l'image d'information de pilotage est, à la fin de l'animation propre à être affichée, affichée dans un espace central de la surface d'affichage ;
- l'image d'information de pilotage est liée à un événement nécessitant une réaction du pilote dans un délai inférieur à la seconde ;
- l'image d'information de pilotage est, à la fin de l'animation propre à être affichée, affichée dans un espace périphérique de la surface d'affichage ;
- l'animation propre à être affichée comprend un déplacement de l'image d'information de pilotage d'un espace central de la surface d'affichage jusqu'à l'espace périphérique ;
- l'image d'alerte couvre, à la fin de l'animation propre à être affichée, moins de 30% de la surface d'affichage ;
- le dispositif comprend un collimateur tête haute dont font partie la surface d'affichage et l'ensemble de gestion d'affichage, la vision d'un paysage extérieur étant une vision du paysage extérieur à travers la surface d'affichage ;
- l'animation prend fin avec la disparition de l'image d'alerte ;
- l'animation a une durée inférieure à 4 secondes, de préférence inférieure à 3 secondes ;
- l'animation propre à être affichée comprend une disparition de l'image d'alerte ;
- l'ensemble de gestion est propre à commander l'affichage, pour au moins une première desdites images d'information de pilotage, localisée dans un espace central de la surface d'affichage, d'une première animation pour attirer l'attention d'un utilisateur sur ladite première image d'information de pilotage, ladite première animation comprenant l'affichage d'une image d'alerte, un rétrécissement de l'image d'alerte, et un grossissement de la première image d'information de pilotage, et l'ensemble de gestion est propre à commander l'affichage, pour au moins une deuxième desdites images d'information de pilotage, localisée dans un espace périphérique de la surface d'affichage, d'une deuxième animation pour attirer l'attention d'un utilisateur sur ladite deuxième image d'information de pilotage, ladite deuxième animation comprenant l'affichage d'une image d'alerte, un rétrécissement de l'image d'alerte, un centrage de l'image d'alerte sur la deuxième image d'information de pilotage, et, après le rétrécissement et le centrage, un sursaut de l'image d'alerte, ledit sursaut comprenant un grossissement de l'image d'alerte, ledit grossissement n'excédant pas 20%, de préférence 10%, de la taille de l'image d'alerte avant le grossissement, puis un nouveau rétrécissement de l'image d'alerte jusqu'à sensiblement la même taille qu'avant le grossissement ; et
- la vision du paysage extérieur est une vision du paysage extérieur à travers le dispositif d'aide au pilotage.

L'invention a également pour objet un procédé d'aide au pilotage d'un véhicule, notamment d'un aéronef, par affichage d'images sur une surface d'affichage présentant lesdites images en superposition avec une vision d'un paysage extérieur, le procédé comprenant une étape d'affichage d'une information de pilotage sur la surface d'affichage, caractérisé en ce que le procédé comprend les étapes supplémentaires suivantes :
- affichage d'une image d'alerte sur la surface d'affichage, et
- rétrécissement de l'image d'alerte.

Selon un mode de réalisation particulier de l'invention, la vision du paysage extérieur est une vision du paysage extérieur à travers la surface d'affichage.

D'autres caractéristiques et avantages de l'invention apparaîtront à la lecture de la description qui va suivre, donnée uniquement à titre d'exemple et faite en se référant aux dessins annexés, sur lesquels :
- la Figure 1 est une vue schématique d'un dispositif d'aide au pilotage selon l'invention,
- la Figure 2 est une vue schématique d'une surface d'affichage du dispositif de la Figure 1, une pluralité d'images d'information de pilotage étant affichées sur ladite surface,
- la Figure 3 est une vue similaire à la Figure 2, une première partie d'une première animation étant affiché,
- la Figure 4 est une vue similaire à la Figure 2, une deuxième partie de la première animation étant affiché,
- la Figure 5 est une vue similaire à la Figure 2, une troisième partie de la première animation étant affichée,
- la Figure 6 est une vue similaire à la Figure 2, une première partie d'une deuxième animation étant affiché,
- la Figure 7 est une vue similaire à la Figure 2, une deuxième partie de la deuxième animation étant affiché,
- la Figure 8 est une vue similaire à la Figure 2, une troisième partie de la deuxième animation étant affichée,
- la Figure 9 est une vue similaire à la Figure 2, une quatrième partie de la deuxième animation étant affichée,
- la Figure 10 est une vue similaire à la Figure 2, une cinquième partie de la deuxième animation étant affichée, et
- la Figure 11 est un diagramme en blocs illustrant un procédé mis en oeuvre par le dispositif de la Figure 1.

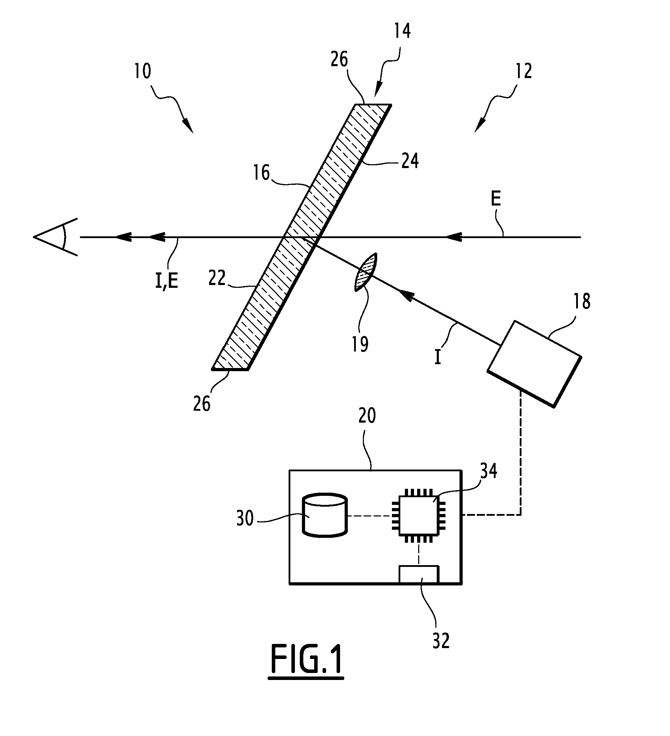

Le dispositif d'aide au pilotage 10 représenté sur la Figure 1 est un dispositif à affichage tête haute. Il équipe un aéronef (non représenté). En variante, il équipe un casque de pilote d'aéronef.

Le dispositif d'aide au pilotage 10 comprend un collimateur tête haute 12.

Le collimateur tête haute 12 comprend une lame 14 en matériau transparent, par exemple en verre, définissant une surface d'affichage 16. Il comprend en outre une source d'images 18, pour l'affichage d'images sur la surface d'affichage 16, une optique de collimation 19, pour modifier un faisceau I de rayonnements issu de la source 18 de sorte que les rayonnements du faisceau soient orientés sensiblement parallèlement les uns aux autres après traversée de l'optique de collimation 19, et un ensemble de gestion d'affichage 20, pour le pilotage de la source 18.

De façon connue, la lame 14 forme un combineur, adapté pour qu'un faisceau E de rayonnements issus de l'environnement extérieur de l'aéronef traverse la lame 14 sans être dévié, et que le faisceau I de rayonnements issu de la source 18 soit, après traversée de la lame 14, réorienté de façon à être parallèle au faisceau E. Ainsi, les images générées par la source 18 et affichées sur la surface 16 sont des images virtuelles localisées à l'infini, se présentant en surimpression avec une vision de l'environnement extérieur de l'aéronef au travers de la lame 14.

En option, l'optique de collimation 19 est intégrée à la lame 14.

La lame 14 présente deux grandes faces 22, 24 opposées, reliées l'une à l'autre par un bord 26. Elle est disposée de sorte que l'une 22 des grandes faces 22, 24 soit orientée vers l'intérieur du cockpit, la face opposée 24 étant orientée vers l'extérieur du cockpit.

La surface d'affichage 16 est constituée par la grande face 22 de la lame 14. Elle est délimitée à sa périphérie par le bord 26.

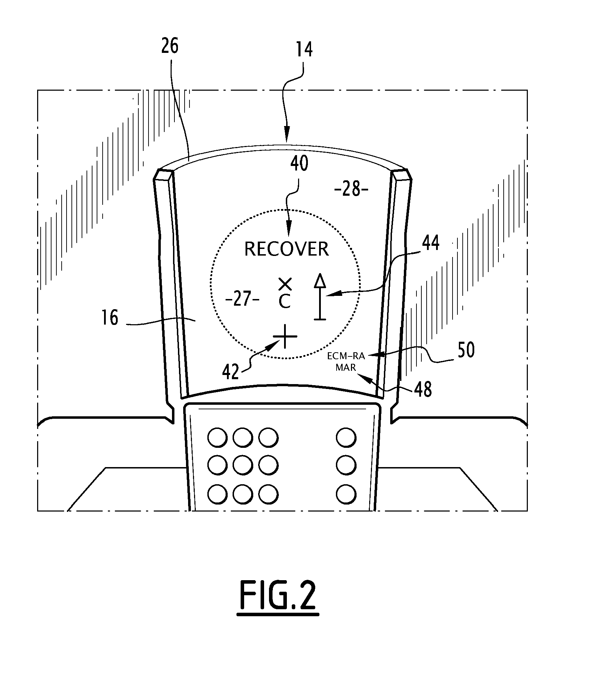

En référence à la Figure 2, la surface d'affichage 16 comprend un centre C, un espace central 27, centré sur le centre C, et un espace périphérique 28, s'étendant entre l'espace central 27 et le bord 26. L'espace central 27 occupe en particulier plus de 50% de la surface d'affichage 16.

De retour à la Figure 1, la source 18 est un afficheur monochrome à tube cathodique (couramment désigné par l'acronyme CRT, de l'anglais Cathode Ray Tube) permettant d'afficher les informations en couleur verte.

En variante, l'afficheur à tube cathodique est remplacé par un afficheur à cristaux liquides permettant d'afficher les informations selon au moins deux couleurs différentes.

L'ensemble de gestion d'affichage 20 comprend une mémoire 30, stockant une pluralité d'images d'information de pilotage à afficher sur la surface d'affichage 16, un module 32 de communication avec des équipements de l'aéronef, et un calculateur 34, programmé pour commander la source 18 de sorte à afficher lesdites images d'information de pilotage sur la surface d'affichage 16 en fonction de signaux reçus par le module de communication 32.

En référence à la Figure 2, lesdites images d'information de pilotage comprennent par exemple une image 40 d'information de perte de contrôle de l'aéronef, une image 42 d'information de collision imminente, une image 44 d'information de collision sol, une image 48 d'information de distance minimale de dégagement, et une image 50 d'information d'éclairage de l'aéronef.

Les images 40, 42, 44 sont destinées à être affichées dans l'espace central 27. Les images 48, 50 sont destinées à être affichées dans l'espace périphérique 28.

Le calculateur 34 est programmé pour afficher l'image 40 lorsque le module de communication 32 reçoit un signal indiquant que le pilote est sur le point de rejoindre un domaine de vol non autorisé, dans lequel le rapport de la vitesse de l'aéronef sur son incidence est trop faible. Par « sur le point », on comprend que l'événement est susceptible de se produire dans un délai de l'ordre d'une seconde. Cette image 40 est généralement dénommée « alerte RECOVER ».

Le calculateur 34 est programmé pour afficher l'image 42 lorsque le module de communication 32 reçoit un signal indiquant que l'aéronef passe en dessous de 70% d'une hauteur minimum de vol préalablement réglée par le pilote, ou bien indiquant que l'aéronef risque d'être impacté par la sphère d'éclats d'une bombe ayant explosée si aucune action n'est entreprise. Cette image 42 est généralement dénommée « alerte dégagement TBA » ou « croix de dégagement ».

Le calculateur 34 est programmé pour afficher l'image 44 lorsque le module de communication 32 reçoit un signal indiquant que l'aéronef est à une hauteur inférieure à une hauteur seuil. Cette image 44 est généralement dénommée « flèche anti collision sol ».

Le calculateur 34 est programmé pour afficher l'image 48 lorsque le module de communication 32 reçoit un signal indiquant que l'aéronef est sur le point d'entrer dans une zone dans laquelle il est susceptible d'être atteint par un missile. Cette image 48 est généralement dénommée « alerte MAR », de l'anglais « Minimum Abort Range ».

Le calculateur 32 est programmé pour afficher l'image 50 lorsque le module de communication 34 reçoit un signal indiquant que l'aéronef est éclairé par un rayonnement de guidage de missile. Cette image est généralement dénommée « alerte SPECTRA ».

Les images 40, 42, 44 sont toutes liées à des événements (risques de collision ou de perte de contrôle) nécessitant une réaction du pilote dans un délai inférieur à la seconde.

Les images 48 et 50 sont affichées dans la zone périphérique 28 car elles concernent des informations critiques mais demandant une moindre urgence de réaction de la part du pilote, bien que devant être rapidement portées à la connaissance du pilote. Ces alertes sont affichées en couleur ambre sur les dispositifs polychromes d'aide au pilotage à affichage tête basse.

Les images d'information de pilotage comprennent également d'autres images qui, pour des raisons de clarté, n'ont pas été représentées sur les Figures. Ces autres images comprennent notamment des images d'information de risques de compromission de la sécurité du vol, couramment appelées « alertes rouges » car ces alertes s'affichent en couleur rouge sur certains dispositifs polychromes de l'aéronef, tels que les dispositifs d'aide au pilotage à affichage tête basse. Le calculateur 34 est programmé pour afficher ces alertes rouges dans la zone centrale 27. Ces alertes rouges comprennent notamment les labels « LEFT ENGINE FIRE » et « RIGHT ENGINE FIRE », que le calculateur 34 est programmé pour afficher lorsque le module de communication 32 reçoit un signal indiquant que le moteur gauche, respectivement le moteur droit, est en feu.

Il est essentiel que l'attention du pilote puisse se porter rapidement sur les images d'information de pilotage lors de leur affichage. A cet effet, la mémoire 30 stocke une pluralité d'animations à afficher sur la surface d'affichage 16, et le calculateur 34 est programmé pour commander la source 18 de sorte à afficher lesdites animations sur la surface d'affichage 16 en fonction de signaux reçus par le module de communication 32.

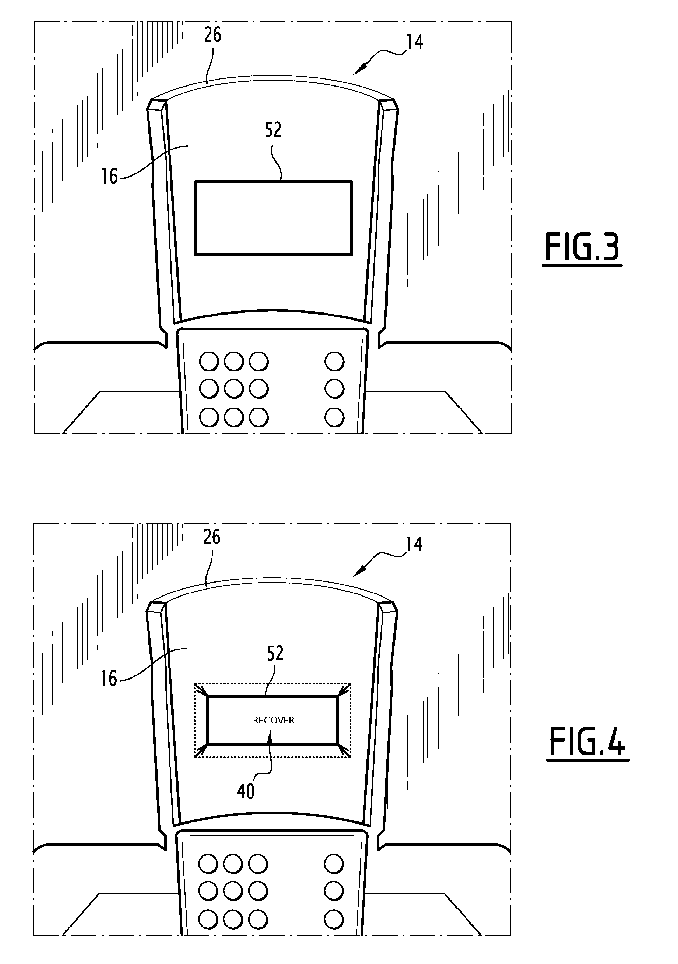

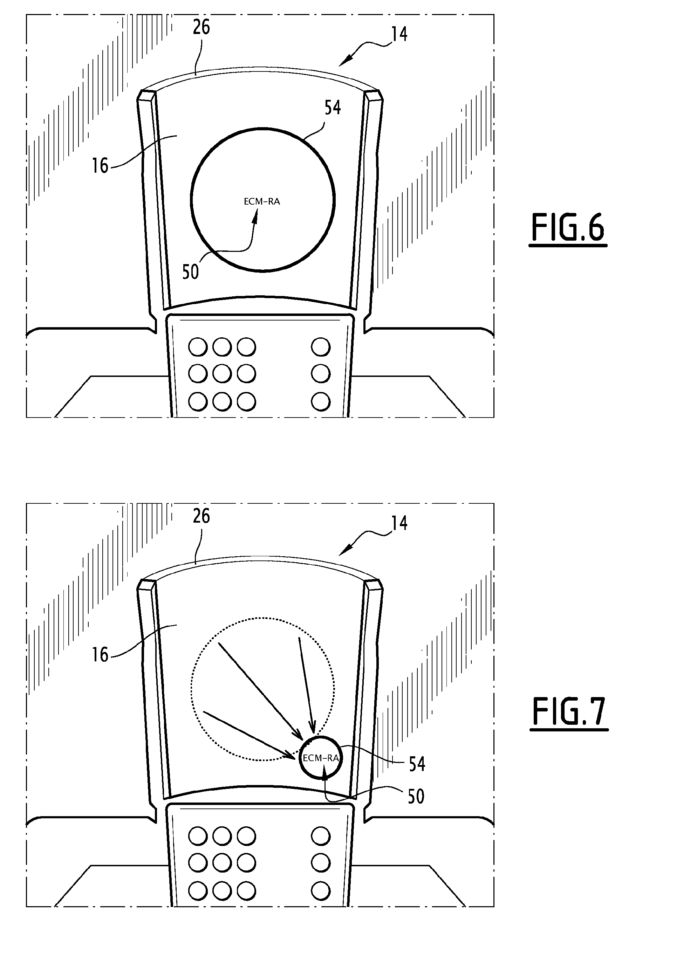

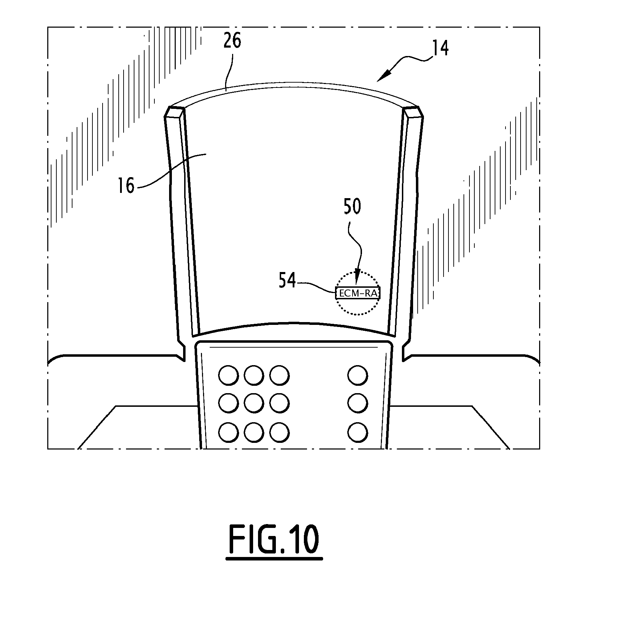

Chaque animation est associée à une image d'information de pilotage, et est destinée à attirer l'attention du pilote sur ladite image d'information de pilotage. En particulier, une première animation, représentée sur les Figures 3 à 5, est associée à l'image 40, et une deuxième animation, représentée sur les Figures 6 à 10, est associée à l'image 50.

En référence aux Figures 3, 4, 6 et 7, chaque animation comprend une apparition de l'image d'information de pilotage, dans les exemples représentés les images 40, 50, un affichage d'une image d'alerte 52, 54 centrée sur le centre C de la surface d'affichage 16, l'image d'alerte 52, 54 couvrant plus de 50%, de préférence plus de 75% de la surface d'affichage 16, un rétrécissement de l'image d'alerte 52, 54, et un centrage de l'image d'alerte 52, 54 sur l'image d'information de pilotage.

L'apparition de l'image d'information de pilotage est de préférence, comme représenté, localisée dans l'espace central 27.

Dans le cas d'un affichage polychrome, l'image d'alerte 52, 54 est de préférence verte. Le cerveau humain étant plus sensible au vert qu'au rouge, l'utilisation de cette couleur permet d'accélérer la perception de l'affichage de l'image d'alerte 52, 54 par le pilote.

L'image d'alerte 52, 54 est de préférence un cadre. En particulier, l'image d'alerte 52 de la première animation est un cadre rectangulaire, et l'image d'alerte 54 de la deuxième animation est un cadre circulaire.

On notera que l'on qualifie de « couvert par l'image d'alerte 52, 54 » l'espace de la surface d'affichage 16 qui est encadré par le cadre. Ainsi, la proposition « l'image d'alerte 52, 54 couvre x% de la surface d'affichage 16 » est à interpréter comme « l'image d'alerte 52, 54 encadre x% de la surface d'affichage 16 ».

Le rétrécissement de l'image d'alerte 52, 54 réduit la taille de l'image d'alerte 52, 54 de sa taille initiale lors de son affichage jusqu'à une taille finale à la fin du rétrécissement. La taille finale de l'image d'alerte 52, 54 est telle que l'image d'alerte 52, 54 couvre moins de 30% de la surface d'affichage 16.

Le rétrécissement est avantageusement continu. En d'autres termes, la taille de l'image d'alerte 52, 54 diminue continûment de sa taille initiale à sa taille finale au cours du rétrécissement, sans palier lors duquel la taille de l'image d'alerte 52, 54 varierait brusquement.

Le rétrécissement a avantageusement une durée inférieure à 2 secondes, et de préférence supérieure à 0,2 seconde.

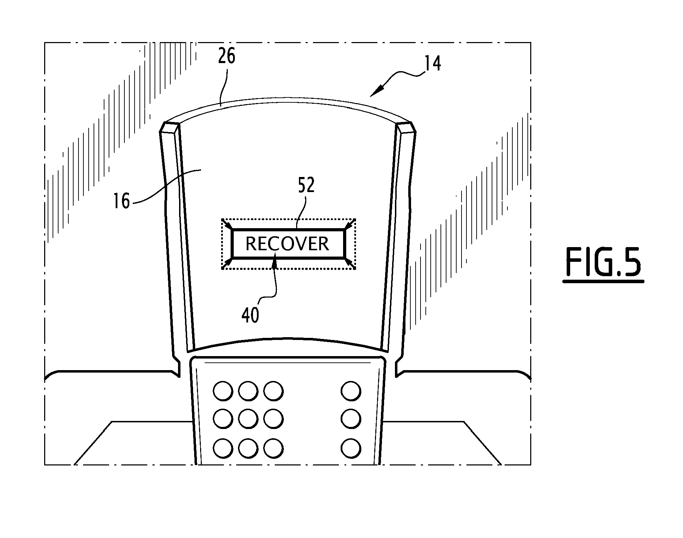

La première animation comprend en plus, en référence aux Figure 4 et 5, un grossissement de l'image d'information de pilotage 40. Ce grossissement augmente la taille de l'image d'information de pilotage 40 d'une taille originale sensiblement nulle lors de son apparition jusqu'à une taille normale d'affichage de l'image d'information de pilotage à la fin de l'animation.

Le grossissement est avantageusement continu. En d'autres termes, la taille de l'image d'information de pilotage 40 augmente continûment de sa taille originale à sa taille normale au cours du grossissement, sans palier lors duquel la taille de l'image d'information de pilotage 40 varierait brusquement.

La taille normale est telle que l'image d'information de pilotage 40 ne dépasse pas hors de l'image d'alerte 52 lorsque l'image d'alerte 52 a sa taille finale.

La première animation comprend également un clignotement simultané de l'image d'alerte 52 et de l'image d'information de pilotage 40 à la fin de l'animation. Ce clignotement est adapté pour durer tant que l'alerte est active.

En option, la première animation comprend également un changement de forme de l'image d'alerte 52, préalablement à son clignotement.

En variante, la première animation comprend, en remplacement du clignotement de l'image d'alerte 52, une disparition de l'image d'alerte 52. Cette disparition est adaptée pour se produire alors que l'image d'information de pilotage 40 demeure affichée. Cette disparition de l'image d'alerte 52 consiste typiquement en un estompage de l'image d'alerte 52.

La deuxième animation ne comprend pas de grossissement de l'image d'information de pilotage 50. Elle comprend en revanche, en référence aux Figures 6 à 10, un déplacement de l'image d'information de pilotage 50 de l'espace central 27 à l'espace périphérique 28, et un sursaut de l'image d'alerte 54, après rétrécissement et centrage de l'image d'alerte 54.

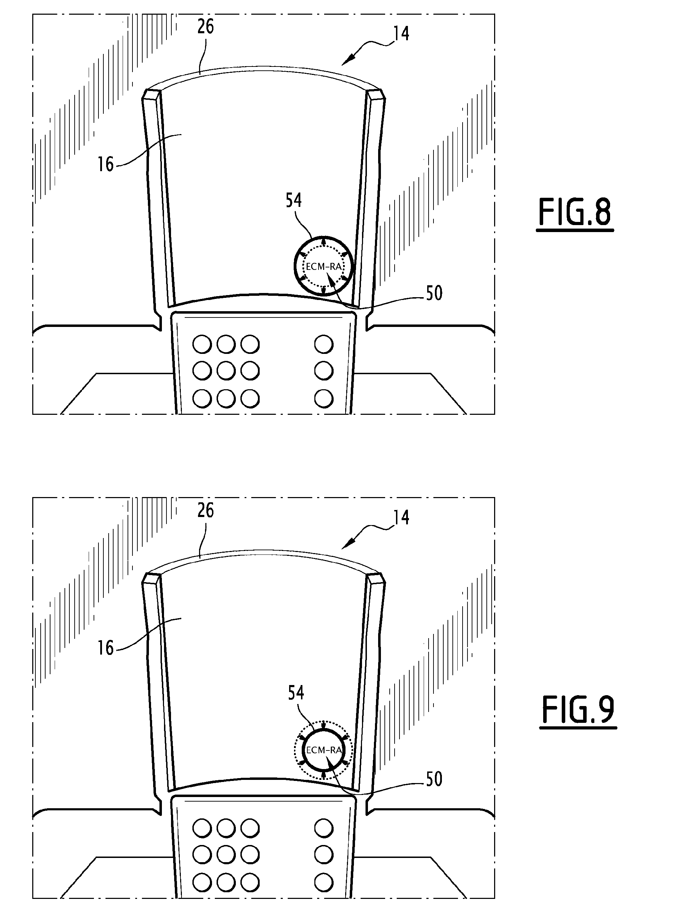

Le sursaut de l'image d'alerte 54 comporte, comme visible sur les Figures 8 et 9, un grossissement de l'image d'alerte, ledit grossissement n'excédant avantageusement pas 20%, de préférence 10% de la taille de l'image d'alerte 54 avant le grossissement, puis un nouveau rétrécissement de l'image d'alerte 54, jusqu'à sensiblement la même taille qu'avant le grossissement.

Avantageusement, le grossissement et le nouveau rétrécissement sont chacun continus.

Le sursaut a de préférence une durée inférieure à 2 secondes, et de préférence supérieure à 1 seconde.

La deuxième animation comprend également un changement de forme de l'image d'alerte 54. Ce changement de forme succède au sursaut.

En option, la deuxième animation comprend également, suite au changement de forme, un clignotement de l'image d'alerte 54 alors que l'image d'information de pilotage 50 demeure affichée, avec, optionnellement, un clignotement de l'image d'information de pilotage 50 simultanément au clignotement de l'image d'alerte 54.

En variante, la deuxième animation comprend, en remplacement du changement de forme et du clignotement de l'image d'alerte 54, une disparition de l'image d'alerte 54. Cette disparition est adaptée pour se produire alors que l'image d'information de pilotage 50 demeure affichée. Cette disparition de l'image d'alerte 54 consiste typiquement en un estompage de l'image d'alerte 54.

D'autres animations sont également associées aux images 42 et 44, ainsi qu'aux images d'information de risques de compromission de la sécurité du vol. La description de la première animation est applicable à chacune desdites autres animations, la référence à « l'image d'information de pilotage 40 » devant simplement être remplacée par une référence à « l'image d'information de pilotage 42 », à « l'image d'information de pilotage 44 », ou à « l'image d'information de risques de compromission de la sécurité du vol ».

De façon générale, la description de la première animation est applicable à chaque animation associée à une image d'information de pilotage qui, à la fin de l'animation, est affichée dans l'espace central 27.

Une autre animation est également associée à l'image 48. La description de la deuxième animation est applicable à cette autre animation, la référence à « l'image d'information de pilotage 50 » devant simplement être remplacée par une référence à « l'image d'information de pilotage 48 »

De façon générale, la description de la deuxième animation est applicable à chaque animation associée à une image d'information de pilotage qui, à la fin de l'animation, est affichée dans l'espace périphérique 28.

Le calculateur 34 est programmé pour ne répéter aucune des animations en l'absence de nouveau signal reçu par le module de communication 32. Cela évite de surcharger cognitivement le pilote.

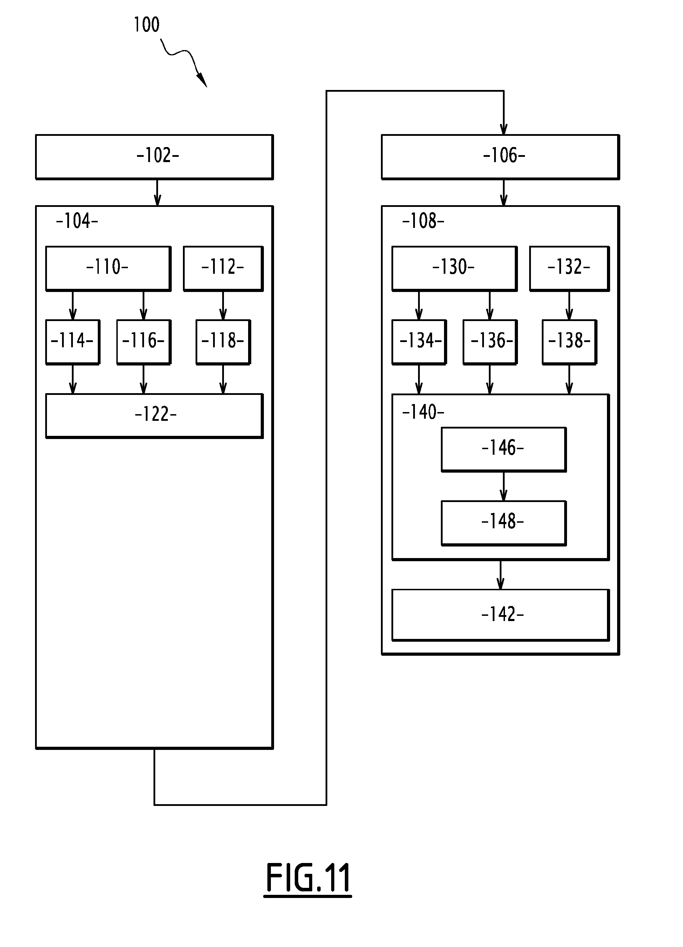

Un procédé 100 d'aide au pilotage mis en oeuvre par le dispositif d'aide 10 va maintenant être décrit, en référence à la Figure 11.

Le procédé 100 comprend une première étape 102 de réception d'un premier signal par le module de communication 32, une deuxième étape 104 d'affichage de la première animation, une troisième étape 106 de réception d'un deuxième signal par le module de communication 32, et une quatrième étape 108 d'affichage de la deuxième animation.

Lors de la première étape 102, le module de communication 32 reçoit un signal signifiant que le pilote est sur le point de rejoindre un domaine de vol non autorisé. Le calculateur 34 sélectionne alors la première animation dans la mémoire 30, et commande l'affichage de la première animation par la source d'images 18.

La deuxième étape 104 fait suite à la première étape 102, et comprend les sous-étapes suivantes :
- affichage 110 de l'image d'alerte 52,
- apparition 112 de l'image d'information de pilotage 40,
- rétrécissement 114 de l'image d'alerte 52,
- centrage 116 de l'image d'alerte 52 sur l'image d'information de pilotage 40,
- grossissement 118 de l'image d'information de pilotage 40
- clignotement 122 simultané des images d'alerte 52 et d'information de pilotage 40.

Lors de l'étape d'affichage 110, l'image d'alerte 52 est affichée sur la surface d'affichage 16, l'image d'alerte 52 couvrant plus de 50%, de préférence plus de 75%, de la surface d'affichage 16. L'image d'alerte 52 est alors centrée sur le centre C de la surface d'affichage 16.

L'étape d'apparition 112 est sensiblement concomitante à l'étape d'affichage 110. Lors de cette étape 112, l'image d'information de pilotage 40 est affichée, ladite image 40 ayant une taille originale sensiblement nulle. L'image 40 est positionnée dans l'espace central 27 de la surface d'affichage 16.

L'étape de rétrécissement 114 fait suite à l'étape d'affichage 110. Lors de cette étape 114, la taille de l'image d'alerte 52 réduit continûment de la taille initiale jusqu'à une taille finale dans laquelle l'image d'alerte 52 couvre moins de 30% de la surface d'affichage 16. L'étape de rétrécissement 114 dure avantageusement moins de 2 secondes, et de préférence plus de 0,2 seconde.

L'étape de centrage 116 est sensiblement concomitante avec l'étape de rétrécissement 114. Lors de cette étape 116, l'image d'alerte 52 se centre sur l'image d'information de pilotage 40.

L'étape de grossissement 118 fait suite à l'étape d'apparition 112 et est sensiblement concomitante avec les étapes de rétrécissement 114 et de centrage 116. Lors de cette étape 118, la taille de l'image 40 augmente continûment de sa taille originale jusqu'à une taille normale d'affichage de l'image 40. Ladite taille normale est telle que l'image d'information de pilotage 40 ne dépasse pas hors de l'image d'alerte 52 lorsque l'image d'alerte 52 a sa taille finale.

L'étape de clignotement 122 fait suite aux étapes 114, 116 et 118. Lors de cette étape 122, les images d'alerte 52 et d'information de pilotage 40 clignotent. L'image d'information de pilotage 40 a sa taille normale et est localisée dans l'espace central 27, et l'image d'alerte 52 a sa taille finale et est centrée sur l'image 40.

Lors de l'étape de clignotement 122, les images d'alerte 52 et d'information de pilotage 40 clignotent. Ces images demeurent affichées en clignotant tant que l'alerte est active. Elles disparaissent ensuite instantanément lorsque l'alerte est terminée, par exemple lorsque le pilote s'est acquitté d'une action à exécuter pour désactiver l'alerte, ou lorsque l'aéronef a été placé dans une position dans laquelle l'alerte n'a plus lieu de d'être active, par exemple par un retour de l'aéronef dans le domaine de vol autorisé.

Dans l'exemple représenté, la troisième étape 106 fait suite à la deuxième étape 104. En variante, la troisième étape 106 survient avant la première étape 102, ou concomitamment à la deuxième étape 104.

Lors de la troisième étape 106, le module de communication 32 reçoit un signal signifiant que l'aéronef est éclairé par un rayonnement de guidage de missile. Le calculateur 34 sélectionne alors la deuxième animation dans la mémoire 30, et commande l'affichage de la deuxième animation par la source d'images 18.

La quatrième étape 108 fait suite à la troisième étape 106, et comprend les sous-étapes suivantes :
- affichage 130 de l'image d'alerte 54,
- apparition 132 de l'image d'information de pilotage 50,
- rétrécissement 134 de l'image d'alerte 54,
- centrage 136 de l'image d'alerte 54 sur l'image d'information de pilotage 50,
- déplacement 138 de l'image d'information de pilotage 50, et
- sursaut 140 de l'image d'alerte 54, et
- changement de forme 142 de l'image d'alerte 54.

Lors de l'étape d'affichage 130, l'image d'alerte 54 est affichée sur la surface d'affichage 16, l'image d'alerte 54 couvrant plus de 50%, de préférence plus de 75%, de la surface d'affichage 16. L'image d'alerte 54 est alors centrée sur le centre C de la surface d'affichage 16.

L'étape d'apparition 132 est sensiblement concomitante à l'étape d'affichage 130. Lors de cette étape 132, l'image d'information de pilotage 50 est affichée, ladite image 50 ayant une taille normale d'affichage. L'image 50 est alors positionnée dans l'espace central 27 de la surface d'affichage 16.

L'étape de rétrécissement 134 fait suite à l'étape d'affichage 130. Lors de cette étape 134, la taille de l'image d'alerte 54 réduit continûment de la taille initiale jusqu'à une taille finale dans laquelle l'image d'alerte 54 couvre moins de 30%, de la surface d'affichage 16. L'étape de rétrécissement 134 dure avantageusement moins de 2 secondes, et de préférence plus de 0,2 seconde.

L'étape de centrage 136 est sensiblement concomitante avec l'étape de rétrécissement 134. Lors de cette étape 136, l'image d'alerte 54 se centre sur l'image d'information de pilotage 50.

L'étape de déplacement 138 est sensiblement concomitante aux étapes de rétrécissement 134 et de centrage 136. Lors de cette étape 138, l'image d'information de pilotage 50 se déplace continûment de son positionnement initial dans l'espace central 27 jusqu'à un positionnement final dans l'espace périphérique 28.

L'étape de sursaut 140 fait suite aux étapes 134, 136, 138, de sorte que, au début de l'étape de sursaut 140, l'image d'information de pilotage 50 est positionnée dans l'espace périphérique 28, et l'image d'alerte 54 est centrée sur ladite image 50, en ayant sa taille finale.

Lors de l'étape de sursaut 140, l'image d'alerte 54 demeure centrée sur l'image d'information de pilotage 50. L'étape de sursaut 140 comprend les sous-étapes suivantes :
- grossissement 146 de l'image d'alerte 54, puis
- nouveau rétrécissement 148 de l'image d'alerte 54.

Lors de l'étape de grossissement 146, la taille de l'image d'alerte 54 augmente, jusqu'à atteindre une taille intermédiaire. Ladite taille intermédiaire est avantageusement inférieure à 120%, de préférence inférieure à 110%, de la taille finale de l'image d'alerte 54.

Lors de l'étape de nouveau rétrécissement 148, la taille de l'image d'alerte 54 diminue jusqu'à revenir à la taille finale.

L'étape de sursaut 140 a avantageusement une durée inférieure à 2 secondes, et de préférence supérieure à 1 seconde.

L'étape de changement de forme 142 fait suite à l'étape de sursaut 140. Lors de cette étape, l'image d'alerte 54 change de forme, passant de sa forme de cadre circulaire à une forme de cadre rectangulaire.

Les images d'alerte 54 et d'information de pilotage 50 demeurent ensuite affichées, immobiles, tant que l'alerte est active. L'image d'information de pilotage 50 a sa taille normale et est localisée dans l'espace périphérique 28, et l'image d'alerte 54 a sa taille finale et est centrée sur l'image 50. Ces images 50, 54 disparaissent instantanément lorsque l'alerte est terminée.

Grâce à l'invention, l'oeil du pilote est rapidement attiré vers l'information de pilotage associée à l'animation, quand bien même le pilote n'est pas en train d'observer l'environnement à travers la surface d'affichage 16. En effet, la partie excentrée de la rétine est particulièrement apte à percevoir des mouvements, et l'oeil possède un réflexe d'orientation qui le fait spontanément s'orienter vers un mouvement perçu.

En outre, l'image d'alerte couvrant au cours de l'animation une grande partie de la surface d'affichage, la détection du mouvement par l'oeil est facilitée.

Ainsi, l'invention permet de conduire le regard du pilote à se porter vers l'information de pilotage associée à l'animation affichée en un temps inférieur à 0,4 seconde après le début de l'affichage de l'animation.

On notera que, pour des raisons de clarté, les vues de la surface d'affichage 16 présentées sur les Figures 2 à 10 ont été simplifiées de façon à ne faire figurer que les seules images d'information de pilotage 40, 42, 44, 48, 50 et images d'alerte 52, 54. La surface d'affichage 16 présente normalement d'autres informations de pilotage qui n'ont pas été représentées ici pour ne pas surcharger les Figures.

## Revendications

1. Dispositif (10) d'aide au pilotage d'un véhicule, notamment d'un aéronef, le dispositif d'aide au pilotage (10) comprenant une surface (16) d'affichage d'images et un ensemble (20) de gestion d'affichage d'images destinées à être affichées sur la surface d'affichage (16) en superposition avec une vision d'un paysage extérieur, l'ensemble de gestion (20) étant propre à commander l'affichage d'images d'information de pilotage (40, 42, 44, 48, 50) sur la surface d'affichage (16),
**caractérisé en ce que** l'ensemble de gestion (20) est propre à commander l'affichage, pour au moins une desdites images d'information de pilotage (40, 42, 44, 48, 50), d'une animation destinée à attirer l'attention d'un utilisateur sur ladite image d'information de pilotage (40, 42, 44, 48, 50), l'animation comprenant l'affichage d'une image d'alerte (52, 54) et le rétrécissement de l'image d'alerte (52, 54).

2. Dispositif d'aide au pilotage (10) selon la revendication 1, dans lequel l'image d'alerte (52, 54) couvre, à au moins un instant de l'animation, plus de 50%, de préférence plus de 75% de la surface d'affichage (16).

3. Dispositif d'aide au pilotage (10) selon la revendication 1 ou 2, dans lequel l'image d'alerte (52, 54) a une forme de cadre.

4. Dispositif d'aide au pilotage (10) selon l'une quelconque des revendications précédentes, dans lequel l'image d'alerte (52, 54) est, au début de l'animation, centrée sur un centre (C) de la surface d'affichage (16).

5. Dispositif d'aide au pilotage (10) selon l'une quelconque des revendications précédentes, dans lequel l'animation propre à être affichée comprend un centrage de l'image d'alerte (52, 54) sur l'image d'information de pilotage (40, 42, 44, 48, 50).

6. Dispositif d'aide au pilotage selon la revendication 5, dans lequel l'animation propre à être affichée comprend, après le rétrécissement et le centrage de l'image d'alerte (52, 54), un sursaut de l'image d'alerte (52, 54), comportant :
- un grossissement de l'image d'alerte (52, 54), ledit grossissement n'excédant avantageusement pas 20%, de préférence 10%, de la taille de l'image d'alerte (52, 54) avant le grossissement, puis
- un nouveau rétrécissement de l'image d'alerte (52, 54), jusqu'à sensiblement la même taille qu'avant le grossissement.

7. Dispositif d'aide au pilotage (10) selon l'une quelconque des revendications précédentes, dans lequel l'animation propre à être affichée comprend l'apparition de l'image d'information de pilotage (40, 42, 44, 48, 50).

8. Dispositif d'aide au pilotage (10) selon l'une quelconque des revendications précédentes, dans lequel l'animation propre à être affichée comprend un grossissement de l'image d'information de pilotage (40, 42, 44).

9. Dispositif d'aide au pilotage (10) selon l'une quelconque des revendications précédentes, dans lequel l'image d'information de pilotage (40, 42, 44) est, à la fin de l'animation propre à être affichée, affichée dans un espace central (27) de la surface d'affichage (16).

10. Dispositif d'aide au pilotage (10) selon l'une quelconque des revendications précédentes, dans lequel l'image d'information de pilotage (40, 42, 44) est liée à un événement nécessitant une réaction du pilote dans un délai inférieur à la seconde.

11. Dispositif d'aide au pilotage (10) selon l'une quelconque des revendications 1 à 8, dans lequel l'image d'information de pilotage (48, 50) est, à la fin de l'animation propre à être affichée, affichée dans un espace périphérique (28) de la surface d'affichage (16).

12. Dispositif d'aide au pilotage (10) selon la revendication 11, dans lequel l'animation propre à être affichée comprend un déplacement de l'image d'information de pilotage (48, 50) d'un espace central (27) de la surface d'affichage (16) jusqu'à l'espace périphérique (28).

13. Dispositif d'aide au pilotage (10) selon l'une quelconque des revendications précédentes, dans lequel l'image d'alerte (52, 54) couvre, à la fin de l'animation propre à être affichée, moins de 30% de la surface d'affichage (16).

14. Dispositif d'aide au pilotage (10) selon l'une quelconque des revendications précédentes, comprenant un collimateur tête haute (12) dont font partie la surface d'affichage (16) et l'ensemble de gestion d'affichage (20), la vision d'un paysage extérieur étant une vision du paysage extérieur à travers la surface d'affichage (16).

15. Procédé (100) d'aide au pilotage d'un véhicule, notamment d'un aéronef, par affichage d'images sur une surface d'affichage (16) présentant lesdites images en superposition avec une vision d'un paysage extérieur, le procédé (100) comprenant une étape (112, 132) d'affichage d'une information de pilotage (40, 42, 44, 48, 50) sur la surface d'affichage (16), **caractérisé en ce que** le procédé (100) comprend les étapes supplémentaires suivantes :
- affichage (110, 130) d'une image d'alerte (52, 54) sur la surface d'affichage (16), et
- rétrécissement (114, 134) de l'image d'alerte (52, 54).
